(19) Europäisches Patentamt
European Patent Office
Office européen des brevets

(11) **EP 4 742 310 A1**

(12) **EUROPEAN PATENT APPLICATION**

(43) Date of publication:
**13.05.2026 Bulletin 2026/20**

(21) Application number: **25213751.8**

(22) Date of filing: **05.11.2025**

(51) International Patent Classification (IPC):
*H01M 4/04* (2006.01)   *H01M 4/139* (2010.01)

(52) Cooperative Patent Classification (CPC):
**H01M 4/0435; H01M 4/139**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.11.2024 KR 20240157039**

(71) Applicant: **SAMSUNG SDI CO., LTD.
Yongin-si, Gyeonggi-do 17084 (KR)**

(72) Inventors:
• **KIM, Sangpil
17084 Yongin-Si Gyeonggi-do (KR)**

• **KIM, Kangmin
17084 Yongin-Si Gyeonggi-do (KR)**
• **LEE, Gaeon
17084 Yongin-Si Gyeonggi-do (KR)**
• **LEE, Jinhyon
17084 Yongin-Si Gyeonggi-do (KR)**
• **YEON, Dong Hee
17084 Yongin-Si Gyeonggi-do (KR)**

(74) Representative: **Michalski Hüttermann & Partner
Patentanwälte mbB
Kaistraße 16A
40221 Düsseldorf (DE)**

(54) **METHOD FOR MANUFACTURING DRY ELECTRODE FILM, DRY ELECTRODE FILM, AND DRY ELECTRODE INCLUDING SAME**

(57) The present disclosure includes a method for manufacturing a dry electrode film, a dry electrode film, and a dry electrode including the dry electrode film. The method for manufacturing a dry electrode film includes preparing a dry mixture by dry mixing an active material, a conductive material, and a binder, manufacturing a mixture lump by kneading the dry mixture, obtaining an electrode powder by crushing the mixture lump, manufacturing a specimen using the electrode powder through a mold, testing a yield strength of the specimen, and manufacturing, when a test result of the yield strength satisfies a desired criterion, a sheet type dry electrode film having a given thickness by calendaring the electrode powder.

S300

| |
|---|
| PREPARE DRY MIXTURE BY DRY MIXING ACTIVE MATERIAL, CONDUCTIVE MATERIAL, AND BINDER — S310 |
| MANUFACTURE MIXTURE LUMP BY KNEADING DRY MIXTURE — S320 |
| OBTAIN ELECTRODE POWDER BY CRUSHING MIXTURE LUMP — S330 |
| MANUFACTURE SPECIMEN USING ELECTRODE POWDER THROUGH MOLD — S340 |
| TEST YIELD STRENGTH OF SPECIMEN — S350 |
| MANUFACTURE SHEET TYPE DRY ELECTRODE FILM HAVING CERTAIN THICKNESS BY CALENDARING ELECTRODE POWDER WHEN TEST RESULT OF YIELD STRENGTH SATISFIES PREDETERMINED CRITERION — S360 |

**FIG. 1**

EP 4 742 310 A1

**Description**

BACKGROUND

FIELD

Aspects of embodiments of the present disclosure relate to a method for manufacturing a dry electrode film, a dry electrode film, and a dry electrode including the dry electrode film.

DESCRIPTION OF THE RELATED ART

Unlike primary batteries that are not designed to be (re)charged, secondary (or rechargeable) batteries are typically designed to be discharged and recharged. Low-capacity secondary batteries are typically used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly including a positive electrode and a negative electrode, a case accommodating the same, and electrode terminals connected to the electrode assembly.

A dry electrode may include an electrode substrate, an active material, a binder, and a conductive material. A film type dry electrode film may be formed by pressurizing the active material, the binder, and the conductive material. The dry electrode may be manufactured by joining the electrode substrate and the dry electrode film through a lamination process. The mechanical stability of the dry electrode film may be an advantageous factor, and thus various efforts may be made to predict a mechanical property in advance.

The above information disclosed in this Background section is for enhancement of understanding of the background of the present disclosure, and therefore, it may contain information that does not constitute related (or prior) art.

SUMMARY

The present disclosure addresses at least the above technical problems, and aspects of example embodiments of the present disclosure include a method for manufacturing a dry electrode film, a dry electrode film, and a dry electrode including same.

These and other aspects and features of the present disclosure are described in, or are apparent from, the following description of example embodiments of the present disclosure.

In order to realize the objective, according to example embodiments of the present disclosure, a method for manufacturing a dry electrode film includes preparing a dry mixture by dry mixing an active material, a conductive material, and a binder, manufacturing a mixture lump by kneading the dry mixture, obtaining an electrode powder by crushing the mixture lump, manufacturing a specimen using the electrode powder through a mold, testing a yield strength of the specimen, and manufacturing, when a test result of the yield strength satisfies a predetermined or desired criterion, a sheet type dry electrode film having a given thickness by calendaring the electrode powder.

According to example embodiments, the manufacturing of the specimen using the electrode powder through the mold may include filling the electrode powder in the mold, and pressurizing the electrode powder filled in the mold.

According to example embodiments, the filling of the electrode powder in the mold may include filling the electrode powder in the mold so that a weight of the electrode powder filled in the mold is in a range of about 1 g to about 5 g.

According to example embodiments, the pressurizing of the electrode powder filled in the mold may include pressurizing the electrode powder at a pressure of in a range of about 10 MPa to about 100 MPa using a pressurizing member.

According to example embodiments, the testing of the yield strength of the specimen may include pressurizing the specimen to be destroyed using a jig, measuring a load applied to the specimen at a moment when the specimen is destroyed, and calculating the yield strength of the specimen based on the measured load.

According to example embodiments, the calculating of the yield strength of the specimen may include calculating the yield strength of the specimen based on Equation 1 below.

Equation 1:

$$\text{Yield strength (kPa)} = 0.001 \times \left\{ \frac{\text{measured load (kg)} \times \text{acceleration of gravity} \left(\frac{\text{m}}{s^2}\right)}{\text{cross-sectional area of specimen } (m^2)} \right\}.$$

According to example embodiments, the testing of the yield strength of the specimen may further include, after the calculating of the yield strength of the specimen, crushing the electrode powder when the yield strength calculated by Equation 1 is less than a given value.

According to example embodiments, the given value may be about 2.3 MPa.

According to example embodiments, the testing of the yield strength of the specimen may further include, after the calculating of the yield strength of the specimen, measuring an angle of internal friction of the electrode powder, and calculating a tensile strength of the specimen.

According to example embodiments, the measuring of the angle of internal friction of the electrode powder may include measuring the angle of internal friction of the electrode powder using a powder fluidity evaluation method.

According to example embodiments, the calculating of the tensile strength of the specimen may include calculating the tensile strength of the specimen based on Equation 2 below.

Equation 2:

$$\text{Tensile strength (kPa)} = \left\{\frac{1-\sin(\text{angle of internal friction } (°))}{1+\sin(\text{angle of internal friction } (°))}\right\} \times \text{yield strength (kPa)}.$$

According to example embodiments, the calculating of the tensile strength of the specimen may further include, after the calculating of the tensile strength of the specimen, crushing the electrode powder when the tensile strength calculated by Equation 2 is less than a given value.

According to example embodiments, the given value may be equal to about 0.5 MPa.

According to example embodiments of the present disclosure, a dry electrode film includes an electrode powder including an active material, a conductive material, and a binder, wherein the electrode powder has a sheet shape manufactured through calendaring and has a given thickness, and a yield strength of the electrode powder is in a range of about 2.3 MPa or more in a sheet shape state.

According to example embodiments, an angle of internal friction of the electrode powder may be in a range of about 30° to about 50°.

According to example embodiments, a tensile strength of the dry electrode film may be in a range of about 0.5 MPa or more.

According to example embodiments, a porosity of the dry electrode film may be in a range of about 50 % to about 70 %.

According to example embodiments, the active material may include at least one of nickel cobalt aluminum (NCA), lithium ferrophosphate (LFP), and graphite.

According to example embodiments, the binder may include at least one of polytetrafluoroethylene (PTFE), polyvinylidene fluoride (PVDF), and polyacrylonitrile (PAN).

According to example embodiments of the present disclosure, a dry electrode includes a substrate, and a dry electrode film on at least one surface of the substrate. The dry electrode film includes an electrode powder including an active material, a conductive material, and a binder, and the electrode powder has a sheet shape manufactured through calendaring and having a given thickness. A yield strength of the electrode powder is in a range of about 2.3 MPa or more in a sheet shape state.

According to some example embodiments of the present disclosure, a method for manufacturing a dry electrode film with an improved mechanical property, a dry electrode film, and a dry electrode including the same may be disclosed.

According to some example embodiments of the present disclosure, a method for manufacturing a dry electrode film with an improved mechanical property by testing a mechanical property of an electrode powder before the electrode powder is calendared and then manufactured into the dry electrode film, a dry electrode film, and a dry electrode including the same may be disclosed.

According to some example embodiments of the present disclosure, a specimen may be manufactured with a small amount of electrode powder before the electrode powder is calendared and then manufactured into a dry electrode film, and thus the mechanical property may be readily measured.

However, aspects and features of the present disclosure are not limited to those described above, and other aspects and features not mentioned are clearly understood by a person skilled in the art from the detailed description, described below.

BRIEF DESCRIPTION OF THE DRAWINGS

The following drawings attached to this specification illustrate example embodiments of the present disclosure, and further describe aspects and features of the present disclosure together with the detailed description of the present disclosure. Thus, the present disclosure should not be construed as being limited to the drawings:

FIG. 1 is a flowchart illustrating an example of a method for manufacturing a dry electrode film, according to some example embodiments of the present disclosure

FIG. 2 is a diagram explaining a method for manufacturing a dry electrode film, according to some example embodiments of the present disclosure.

FIG. 3 is a diagram illustrating an example of a mold and a pressurizing member, according to some example embodiments of the present disclosure.

FIG. 4 is a diagram illustrating an example of filling an electrode powder in a mold, according to some example embodiments of the present disclosure.

FIG. 5 is a diagram illustrating an example of an electrode powder filled in a mold and a pressurizing member, according to some example embodiments of the present disclosure.

FIG. 6 is a diagram illustrating an example of pressurizing an electrode powder filled in a mold, according to some example embodiments of the present disclosure.

FIG. 7 is a diagram illustrating an example of a specimen manufactured using an electrode powder, according to some example embodiments of the present disclosure.

FIG. 8 is a diagram illustrating an example of a specimen pressurized by a jig and measure equipment which measures a load, according to some example embodiment of the present disclosure

FIG. 9 is a diagram illustrating Equation 1 for calculating a yield strength of a specimen based on a measured load, according to some example embodiment of the present disclosure.

FIG. 10 is a diagram illustrating Equation 2 for calculating a tensile strength of a specimen based on a measured angle of internal friction (AIF) and a calculated yield strength of a specimen, according to some example embodiments of the present disclosure.

FIG. 11 illustrates a cross-sectional view of an example of a dry electrode according to some example embodiments of the present disclosure.

## DETAILED DESCRIPTION

Hereinafter, embodiments of the present disclosure are described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be their own lexicographer to appropriately define the concept of the term to explain the disclosure in the best way.

The example embodiments described in this specification and the configurations shown in the drawings are only some of the example embodiments of the present disclosure and do not represent all of the technical spirit, aspects, and features of the present disclosure. Accordingly, it should be understood that there may be various equivalents and modifications that can replace or modify the example embodiments described herein at the time of filing this application.

It is understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, and the like, may be exaggerated for clarity of illustration. The same reference numerals designate the same elements. As used herein, the term "and/or" includes any and all combinations of one or more of the associated listed items. Further, the use of "may" when describing example embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is understood that, although the terms first, second, third, and the like, may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing example embodiments of the present disclosure and is not intended to be limiting the present disclosure. As used herein, the singular forms "a" and "an" are intended to include the plural forms as well, unless the context clearly indicates otherwise. It is further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, and the like, as being "the same" may mean that they are "substantially the same." Thus, the phrase "substantially the same" may include a case having a deviation that is considered low in the art, for example, a deviation of 5% or less. In addition, when a given parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may indicated that the arbitrary element may be disposed in contact with the upper (or lower) surface of the element, and another element may also be interposed between the element and the arbitrary element disposed on (or under) the element.

In addition, it is understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

As discussed above, when the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

In the present disclosure, dimensions and relative dimensions of layers and regions illustrated in drawings may be exaggerated for clarity of explanation. That is, the dimensions illustrated in drawings are only for convenience of understanding and are not limited thereto. Further, the same reference numerals throughout the specification designate the same elements.

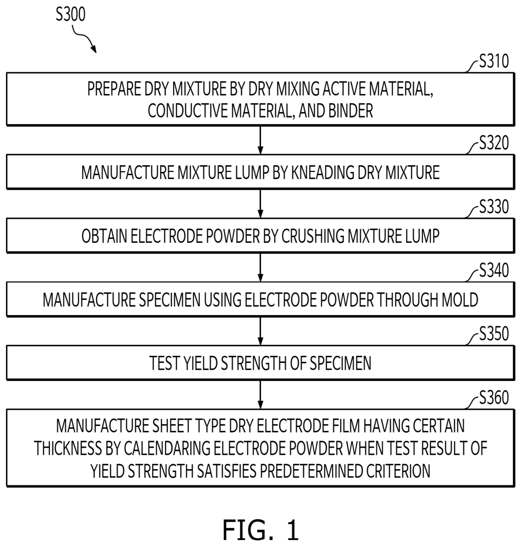

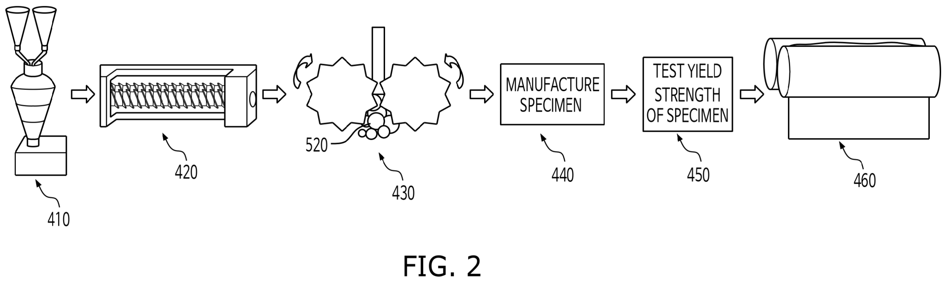

FIG. 1 is a flowchart illustrating an example of a method for manufacturing a dry electrode film, according to some example embodiments of the present disclosure, and FIG. 2 is a diagram explaining a method for manufacturing a dry electrode film, according to some example embodiments of the present disclosure. The method for manufacturing a dry electrode film illustrated in FIG. 2, may include a mixing process 410, a kneading process 420, a crushing process 430, a specimen manufacturing process 440, a process 450 for testing a yield strength of the specimen, and a calendaring process 460 which includes passing the material through one or more rollers.

Referring to FIG. 1, a method S300 for manufacturing a dry electrode film may include preparing a dry mixture by dry mixing an active material, a conductive material, and a binder (S310). For example, the dry mixture may be manufactured by dry mixing the active material, the conductive material, and the binder through the mixing process 410 illustrated in FIG. 2.

Referring to FIG. 1, a mixture lump may be manufactured by kneading the dry mixture (S320). For example, the dry mixture may be formed into the mixture lump through the kneading process 420 illustrated in FIG. 2. In this example, the binder included in the dry mixture may receive shearing force to be fibrillized in the kneading process 420. The fibrillized binder may allow the active material and the conductive material included in the dry mixture to be combined or coupled together. For example, the mixture lump may be formed using a kneader.

Referring to FIG. 1, a powder for an electrode (hereinafter, referred to as electrode powder 520 illustrated in FIG. 2) may be obtained by crushing the mixture lump (S330). For example, the mixture lump may be formed into the electrode powder 520 through the crushing process 430 illustrated in FIG. 2. In this example, the crushing process 430 may be performed using a crusher. The crushed electrode powder 520 may be formed, and thus the film formation of the electrode powder 520 may be facilitated.

Referring to FIG. 1, a specimen may be manufactured using the electrode powder 520 through a mold (S340).

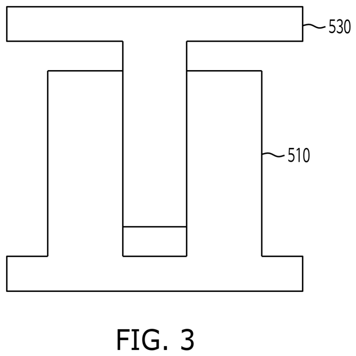

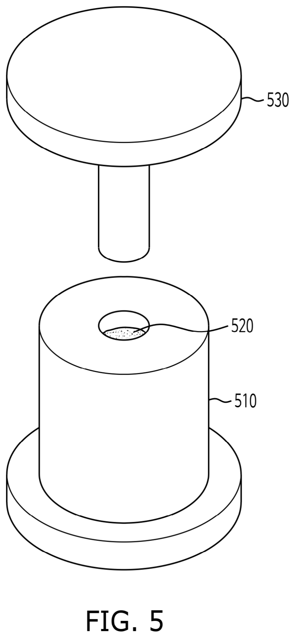

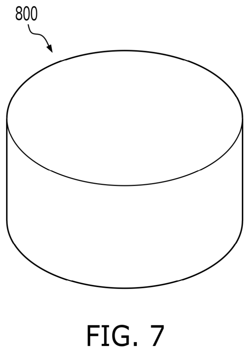

In some example embodiments, the process S340 for manufacturing a specimen (see 800 of FIG. 7) using the electrode powder 520 through a mold (see 510 of FIG. 3) may include a process for filling the electrode powder 520 in the mold 510 and a process for pressurizing the electrode powder 520 filled within the mold 510. In some example embodiments, the process of filling the electrode powder 520 in the mold 510 may include a process for filling the electrode powder 520 in the mold 510 so that the weight of the electrode powder 520 filled within the mold 510 is in a range of about 1 g to about 5 g. In some example embodiments, the process of pressurizing the electrode powder 520 filled within the mold 510 may include a process of pressurizing the electrode powder 520 at a pressure in a range of about 10 MPa to about 100 MPa using a pressurizing member (see 530 of FIG. 3 and FIG. 5).

Referring back to FIG. 1, a yield strength of the specimen may be tested S350.

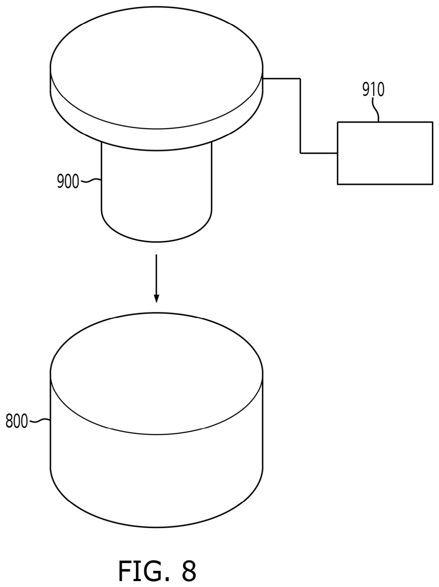

In some example embodiments, the process S350 of testing the yield strength of the specimen 800 may include a process of pressurizing the specimen 800 to be destroyed using a jig (see 900 of FIG. 8), a process of measuring a load applied to the specimen 800 at a moment when the specimen 800 is destroyed, and a process of calculating the yield strength of the specimen 800 based on the measured load.

In some example embodiments, the process of calculating the yield strength of the specimen 800 may include a process of calculating the yield strength of the specimen based on the following Equation 1.

Equation 1:

$$\text{Yield strength (kPa)} = 0.001 \times \left\{ \frac{\text{measured load (kg)} \times \text{acceleration of gravity} \left(\frac{\text{m}}{\text{s}^2}\right)}{\text{cross-sectional area of specimen} \ (m^2)} \right\}.$$

In some example embodiments, after the process of calculating the yield strength of the specimen, the method S300 for manufacturing a dry electrode film may further include a process of crushing the electrode powder 520 when the yield strength calculated by Equation 1 is less than a given value. In some example embodiments, the given value may be equal to about 2.3 MPa. Through the crushing process, the binder may be crushed in a fine fiber form, and thus a surface area of the binder may be increased, the particles may be finer, and the porosity may be increased. Accordingly, the mechanical property of the dry electrode film may be improved.

In some example embodiments, after the process of calculating the yield strength of the specimen 800, the method S300 for manufacturing a dry electrode film may further include a process of measuring an angle of internal friction (AIF) of the electrode powder 520, and a process of calculating a tensile strength of the specimen 800. In some example embodiments, the process of measuring the angle of internal friction (AIF) of the electrode powder may include a process of measuring the angle of internal friction (AIF) of the electrode powder 520 using a powder fluidity evaluation method.

In some example embodiments, the process of calculating the tensile strength of the specimen may include a process of calculating the tensile strength of the specimen based on the following Equation 2.

Equation 2:

$$\text{Tensile strength (kPa)} = \left\{ \frac{1 - \sin\left(\text{angle of internal friction } (°)\right)}{1 + \sin\left(\text{angle of internal friction } (°)\right)} \right\} \times \text{yield strength (kPa)}.$$

In some example embodiments, after the process of calculating the tensile strength of the specimen 800, the method S300 for manufacturing a dry electrode film may further include a process of crushing the electrode powder 520 when the tensile strength calculated by Equation 2 is less than a given value. In some example embodiments, the given value may be equal to about 0.5 MPa.

Referring back to FIG. 1, when the test result of the yield strength satisfies a predetermined or desired criterion, the sheet type dry electrode film having a given thickness may be manufactured by calendaring the electrode powder (S360). For example, the crushed electrode powder 520 may be formed into the dry electrode film through the calendaring process 460. In this example, the calendaring process may allow the fibrillized binder to combine or couple the active material and the conductive material, and to support or maintain the film shape so that the dry electrode film may be formed.

In examples, the dry electrode film may be formed without a separate solvent.

The dry electrode film may be formed in a free-standing film form. For example, the free-standing film may be referred to as a film which may be formed independently without being laminated to a substrate. In this example, after the dry electrode film is formed in the free-standing film form, the dry electrode film may be laminated to the substrate.

The dry electrode film may include the active material, the conductive material, and the binder. For example, the active material may be or include a positive electrode active material or a negative electrode active material.

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide. Specific examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be included. $LiaA1-bXbO2-cDc$ ($0.90 \leq a \leq 1.8$, $0 \leq b \leq 0.5$, and $0 \leq c \leq 0.05$); $LiaMn2-bXbO4-cDc$ ($0.90 \leq a \leq 1.8$, $0 \leq b \leq 0.5$, and $0 \leq c \leq 0.05$); $LiaNi1-b-cCobXcO2-\alpha D\alpha$ ($0.90 \leq a \leq 1.8$, $0 \leq b \leq 0.5$, $0 \leq c \leq 0.5$, and $0 < \alpha < 2$); $LiaNi1-b-cMnbXcO2-\alpha D\alpha$ ($0.90 \leq a \leq 1.8$, $0 \leq b \leq 0.5$, $0 \leq c \leq 0.5$, and $0 < \alpha < 2$); $LiaNibCocL1dGeO2$ ($0.90 \leq a \leq 1.8$, $0 \leq b \leq 0.9$, $0 \leq c \leq 0.5$, $0 \leq d \leq 0.5$, and $0 \leq e \leq 0.1$); $LiaNiGbO2$ ($0.90 \leq a \leq 1.8$ and $0.001 \leq b \leq 0.1$); $LiaCoGbO2$ ($0.90 \leq a \leq 1.8$ and $0.001 \leq b \leq 0.1$); $LiaMn1-bGbO2$ ($0.90 \leq a \leq 1.8$ and $0.001 \leq b \leq 0.1$); $LiaMn2GbO4$ ($0.90 \leq a \leq 1.8$ and $0.001 \leq b \leq 0.1$); $LiaMn1-gGgPO4$ ($0.90 \leq a \leq 1.8$ and $0 \leq g \leq 0.5$); $Li(3-f)Fe2(PO4)3$ ($0 \leq f \leq 2$); or $LiaFePO4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L1 is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be configured to achieve high capacity, and can be applied to a high-capacity, high-density rechargeable lithium battery.

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, at least one of crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiOx$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO2$, a Sn-based alloy, or a combination thereof.

The silicon-carbon composite may be or include a composite of silicon and amorphous carbon. According to an example embodiment, the silicon-carbon composite may be in a form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

The conductive material may be included to impart conductivity (e.g., electrical conductivity) to the electrode. Any material that does not cause chemical change (e.g., does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

As illustrated in FIG. 2, the dry electrode film may be manufactured through a dry process. In the specification, the dry process or the dry electrode may refer to a process or an electrode which includes no or substantially no solvent, or in which a solvent is not intentionally included in an electrode manufacturing process. The solvent may include a process solvent, a process solvent residue, process solvent impurities, and the like. The dry electrode film may include a dry active material and a dry binder, and may be formed in a sheet form. The dry binder may be or include a binder which is not impregnated with the solvent. The dry binder may be or include a binder which includes no solvent.

The dry binder may include a fibrillized binder. The fibrillized binder may be configured as a matrix which supports and binds the dry active material and/or other components included in the dry electrode film. The fibrillized binder may be confirmed in a fibrous form in a scanning electron microscope image for the dry electrode film. The fibrillized binder may have an aspect ratio in a range of about 10 or more, 20 or more, 50 or more, or 100 or more.

In some example embodiments, the dry binder may include at least one of polytetrafluoroethylene (PTFE), a polyvinylidene fluoride-hexafluoropropylene (PVDF-HFP) copolymer, polyvinylidene fluoride (PVDF), polyvinyl alcohol, polyacrylonitrile (PAN), carboxymethyl cellulose (CMC), starch, hydroxypropyl cellulose, cellulose, polyvinyl pyrrolidone, polyethylene, polypropylene, an ethylene-propylene-diene monomer (EPDM), a sulfonated-EPDM, styrene butadiene rubber (SBR), fluoroelastomer, or copolymers thereof. However, the dry binder is not limited thereto, and may include any binder for manufacturing the dry electrode film. For example, the dry binder may include a fluorine-based binder. The fluorine-based binder may include at least one of polytetrafluoroethylene (PTFE), a polyvinylidene fluoride-hexafluoropropylene (PVDF-HFP) copolymer, or polyvinylidene fluoride (PVDF). The content of the dry binder may be in a range of about 0.5 wt% to about 10 wt%, or 1 wt% to 5 wt% for the total weight of the dry electrode film. The dry electrode film may include the dry binder in the above-described range, and thus the cohesion force between the dry electrode film and the substrate may be improved, and the dry electrode including the dry electrode film may maintain the high energy density.

According to some example embodiments, the dry electrode film may include the electrode powder including the active material, the conductive material, and the binder. The dry electrode film may have a sheet shape, which is manufactured by calendaring the electrode powder and has a given thickness, and have the yield strength of about 2.3 MPa or more in a sheet shape state. Porosity of the dry electrode film may be in a range of about 50 % to about 70 %. The angle of internal friction (AIF) of the electrode powder may be in a range of about 30° to about 50°. For example, the tensile strength of the dry electrode film may be in a range of about 0.5 MPa or more.

According to some example embodiments, the electrode active material may include at least one of nickel cobalt aluminum (NCA), lithium ferrophosphate (LFP), and graphite. However, the present disclosure is not limited thereto.

The dry electrode may include the dry electrode film and the substrate. The dry electrode film may be disposed on at least one surface of the substrate.

The substrate may include a material which may not cause chemical changes, and that has high conductivity. For example, the substrate may include at least one of copper, aluminum, stainless use steel (SUS), nickel, a polymer coated with a conductive material, titanium, fired carbon, or a combination thereof.

In some example embodiments, the substrate may be formed in a metal foil or a thin metal plate form such as at least one of copper, a copper alloy, nickel, or a nickel alloy. In other example embodiments, the substrate may be formed in a metal foil or a thin metal plate form such as aluminum or an aluminum alloy.

The flowcharts of FIG. 1 and FIG. 2 and the detailed descriptions therefor are merely examples of the present disclosure, and the scope of the present disclosure is not limited to the flowcharts of FIG. 1 and FIG. 2 and the detailed descriptions therefor. For example, one or more processes in the flowcharts and the detailed descriptions therefor may be added/changed/deleted, the order of one or more processes may be changed, and one or more processes may be performed simultaneously.

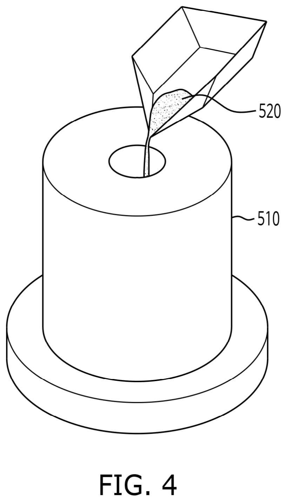

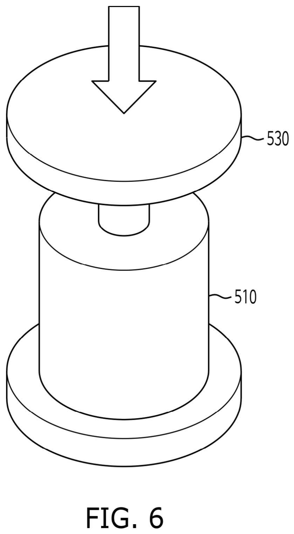

FIG. 3 is a diagram illustrating an example of a mold and a pressurizing member according to some example embodiments of the present disclosure. FIG.4 is a diagram illustrating an example of filling an electrode powder in a mold according to some example embodiments of the present disclosure. FIG. 5 is a diagram illustrating an example of an electrode powder filled in a mold and a pressurizing member according to some example embodiments of the present disclosure. FIG. 6 is a diagram illustrating an example of pressurizing an electrode powder filled in a mold according to some example embodiments of the present disclosure. FIG. 7 is a diagram illustrating an example of a specimen manufactured using an electrode powder according to some example embodiments of the present disclosure.

Referring to FIG. 3 to FIG. 7, the specimen 800 may be manufactured using the electrode powder 520 through the mold 510. The mold 510 may include a cylindrical cavity formed in an inside thereof. The pressurizing member 530 may include a protrusion part to be inserted into the cavity of the mold 510. However, the shapes of the mold 510 and the pressurizing member 530 are not limited thereto, and may have various shapes.

A material for the mold 510 may be determined according to processability, process conditions, and the like. For example, the material for the mold 510 may include at least one of steel, aluminum (Al), a copper alloy, ceramic, carbon fiber, and the like.

The electrode powder 520 may include the active material, the conductive material, and the binder. The active material may include the positive electrode active material and the negative electrode active material. The positive electrode active material may include at least one of nickel cobalt aluminum (NCA), lithium ferrophosphate (LFP), and the like, and the negative electrode active material may include graphite. However, the present disclosure is not limited thereto.

According to some example embodiments, the electrode powder 520 may be filled in the cavity of the mold 510. For example, the electrode powder 520 may be filled in the mold 510 so that the weight of the electrode powder 520 filled within the mold 510 is in a range of about 1 g to about 5 g. Accordingly, the specimen 800 may be readily manufactured with a small amount of electrode powder 520, and the yield strength of the specimen 800 may be measured. However, the weight of the filled electrode powder 520 is not limited thereto.

According to some example embodiments, the electrode powder 520 may be pressurized at a pressure in a range of about 10 MPa to about 100 MPa by the pressurizing member 530. Accordingly, the specimen 800 may be manufactured by pressurizing the electrode powder 520 at various pressures, and thus the specimens 800 corresponding to dry electrode films to be manufactured under various pressure conditions may be manufactured. For example, when the dry electrode films have various densities according to various process conditions, the electrode powder 520 may be pressurized at various pressures, and thus the specimen 800 corresponding to the density of the dry electrode film may be manufactured. Accordingly, before the dry electrode film is manufactured, the mechanical property of the specimen 800 may be measured, and the mechanical property of the dry electrode film may be measured in advance. However, the pressure applied to the electrode powder 520 is not limited thereto, and the electrode powder 520 may be pressurized at a wide range of pressure.

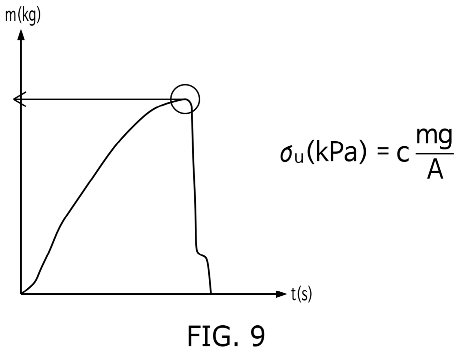

FIG. 8 is a diagram illustrating an example of a specimen pressurized by a jig and measure equipment which measures a load according to some example embodiment of the present disclosure, and FIG. 9 is a diagram illustrating Equation 1 discussed below for calculating a yield strength of a specimen based on a measured load according to some example embodiment of the present disclosure.

Referring to FIG. 8, the specimen 800 may be pressurized to be destroyed using a jig 900. The jig 900 may have various shapes and sizes which may apply the pressure to the specimen 800. The jig 900 may be coupled to measurement equipment 910 which may measure a load. The measurement equipment 910 may measure the load applied at a specific moment.

The specimen 800 may be pressurized to be destroyed using the jig 900. For example, the specimen 800 may be pressurized by the jig 900 in an unconfined state. Then, the load applied to the specimen 800 at a moment when the specimen 800 is destroyed may be measured. As illustrated in FIG. 9, the load applied to the specimen 800 at the moment when the specimen 800 is destroyed may be a load corresponding to a maximum value in the graph.

The yield strength of the specimen 800 may be calculated based on the measured load. For example, the yield strength of the specimen 800 may be a yield strength of the specimen 800 calculated based on Equation 1 discussed below, for example, an unconfined yield strength (UYS). The unconfined yield strength (UYS) may refer to a maximum compressive strength of the electrode powder 520 in a state where a side of the specimen 800 is unconfined when the specimen 800 is simply pressurized without confinement of the side.

Equation 1:

$$\text{Yield strength (kPa)} = 0.001 \times \left\{ \frac{\text{measured load (kg)} \times \text{acceleration of gravity} \left(\frac{\text{m}}{s^2}\right)}{\text{cross-sectional area of specimen} (m^2)} \right\}.$$

In the equation illustrated in FIG. 9, "c" may correspond to a value of 0.001 as a unit conversion constant, "m" may correspond to a measured load (kg), "g" may correspond to an acceleration of gravity (m/s$^2$), and "A" may correspond to a cross-sectional area (m$^2$) of the specimen. Accordingly, the equation illustrated in FIG. 9 may correspond to the above-described Equation 1.

After the process of calculating the yield strength of the specimen 800, the method S300 for manufacturing a dry electrode film illustrated in FIG. 1 may further include a process of crushing the electrode powder when the yield strength calculated by Equation 1 is less than a given value. Through the crushing process, the binder may be crushed in a fine fiber form, and thus a surface area of the binder may be increased, the particles may be finer, and the porosity may be increased. Accordingly, the mechanical property of the dry electrode film may be improved.

When the dry electrode is manufactured using the dry electrode film, it may be desirable that the tensile strength of the dry electrode film is in a range of about 0.5 MPa or more so as to facilitate manufacturing and handling. According to the following Equation 2, when the yield strength of the dry electrode film is in a range of about 2.3 MPa or more, the tensile strength of the dry electrode film may be in a range of about 0.5 MPa or more in the angle of internal friction (AIF) of the electrode powder (see 520 of FIG. 4) of about 40°. Accordingly, it may be desirable that the yield strength of the specimen 800 is in a range of about 2.3 MPa or more.

When the test result of the yield strength satisfies a predetermined or desired criterion, the dry electrode film may be manufactured. Accordingly, when the yield strength of the specimen 800 is in a range of about 2.3 MPa or more, the sheet type dry electrode film having a given thickness may be manufactured through the calendaring process.

After the yield strength of the specimen 800 is calculated, when the yield strength calculated by Equation 1 is less than about 2.3 MPa, the electrode powder 520 may be additionally crushed. When the additionally crushed electrode powder 520 satisfies the above-described test result of the yield strength, the dry electrode film may be manufactured.

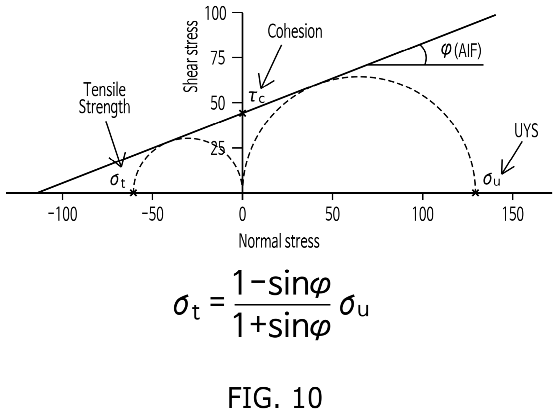

FIG. 10 is a diagram illustrating Equation 2 discussed below for calculating a tensile strength of a specimen based on a measured angle of internal friction (AIF) and a calculated yield strength of a specimen according to some example embodiments of the present disclosure.

After the process of calculating the yield strength of the specimen (see 800 of FIG. 7), the angle of internal friction (AIF) of the electrode powder (see 520 of FIG. 2) may be measured, and the tensile strength of the specimen 800 may be calculated. The tensile strength may refer to tolerable maximum stress when the specimen 800 receives a tensile load.

The angle of internal friction (AIF) of the electrode powder 520 may be a property indicating a resistance which is generated when particles in the electrode powder 520 slide against each other. The angle of internal friction (AIF) of the electrode powder 520 may be measured by a powder fluidity evaluation method. The powder fluidity evaluation method may be a method which may calculate the angle of internal friction (AIF) by measuring the resistance which appears when the electrode powder receives shear force.

The tensile strength of the specimen 800 may be calculated based on the calculated unconfined yield strength (UYS) of the specimen 800 and the measured angle of internal friction (AIF) of the electrode powder 520. For example, the tensile strength of the specimen 800 may be calculated based on Equation 2 below.

Equation 2:

$$\text{Tensile strength (kPa)} = \left\{ \frac{1 - \sin\big(\text{angle of internal friction } (°)\big)}{1 + \sin\big(\text{angle of internal friction } (°)\big)} \right\} \times \text{yield strength (kPa)}.$$

In the equation illustrated in FIG. 10, "$\sigma_t$" may be the tensile strength (kPa), "$\varphi$" may be the angle of internal friction (°), and "$\sigma_u$" may be the yield strength (kPa). Accordingly, the equation illustrated in FIG. 10 may correspond to the above-described Equation 2.

When manufacturing the dry electrode using the dry electrode film, it may be desirable that the tensile strength of the dry electrode film is in a range of about 0.5 MPa or more so as to facilitate manufacturing and handing. Accordingly, it may be desirable that the tensile strength of the specimen 800 is in a range of about 0.5 MPa or more.

When the test result of the tensile strength satisfies a predetermined or desired criterion, the dry electrode film may be manufactured. Accordingly, when the tensile strength of the specimen 800 is in a range of about 0.5 MPa or more, the sheet type dry electrode film having a given thickness may be manufactured through a calendaring process.

After the tensile strength of the specimen 800 is calculated, when the tensile strength calculated by Equation 2 is less than about 0.5 MPa, the electrode powder 520 may be additionally crushed. When the additionally crushed electrode powder 520 satisfies the above-described test result of the tensile strength, the dry electrode film may be manufactured.

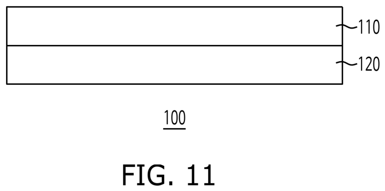

FIG. 11 illustrates a cross-sectional view of an example of a dry electrode according to some example embodiments of the present disclosure.

Referring to FIG. 11, a dry electrode may include a dry electrode film 110 and a substrate 120. The dry electrode film 110 may be disposed on at least one surface of the substrate 120.

The dry electrode film 110 may include an active material, a conductive material, and a binder. For example, the active material may be a positive electrode active material or a negative electrode active material.

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide. Specific examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be included. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dGeO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L1 is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be configured to achieve high capacity, and can be applied to a high-capacity, high-density rechargeable lithium battery.

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, at least one of crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in a form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

The conductive material may be included to impart conductivity to the electrode. Any material that does not cause chemical change and conducts electrons can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

The dry electrode film 110 may be manufactured through a dry process, for example, a dry process as explained above with reference to FIG. 1 to FIG. 10. In the specification, the dry process or the dry electrode may refer to a process or an electrode which includes no solvent, or in which a solvent is not intentionally included in an electrode manufacturing process. The solvent may include a process solvent, a process solvent residue, process solvent impurities, and the like. The dry electrode film 110 may include a dry active material and a dry binder, and may be formed in a sheet form. The dry binder may be or include a binder which is not impregnated with the solvent. The dry binder may be or include a binder which includes no solvent.

The dry binder may include a fibrillized binder. The fibrillized binder may be configured as a matrix which supports and binds the dry active material and/or other components included in the dry electrode film 110. The fibrillized binder may be confirmed in a fibrous form in a scanning electron microscope image for the dry electrode film 110. The fibrillized binder may have an aspect ratio in a range of about 10 or more, 20 or more, 50 or more, or 100 or more.

In some example embodiments, the dry binder may include at least one of polytetrafluoroethylene (PTFE), a polyvinylidene fluoride-hexafluoropropylene (PVDF-HFP) copolymer, polyvinylidene fluoride (PVDF), polyvinyl alcohol, polyacrylonitrile, carboxymethyl cellulose (CMC), starch, hydroxypropyl cellulose, cellulose, polyvinyl pyrrolidone, polyethylene, polypropylene, an ethylene-propylene-diene monomer (EPDM), a sulfonated-EPDM, styrene butadiene rubber (SBR), fluoroelastomer, or copolymers thereof. However, the dry binder is not limited thereto, and may include any binder for manufacturing the dry electrode film. The dry binder may include a fluorine-based binder. The fluorine-based binder may include at least one of polytetrafluoroethylene (PTFE), a polyvinylidene fluoride-hexafluoropropylene (PVDF-HFP) copolymer, or polyvinylidene fluoride (PVDF). The content of the dry binder may be in a range of about 0.5 wt% to about 10 wt%, or 1 wt% to 5 wt% for the total weight of the dry electrode film 110. The dry electrode film 110 may include the dry binder in the above-described range, and thus the cohesion force between the dry electrode film 110 and the substrate 120 may be improved, and the dry electrode 100 including the dry electrode film 110 may maintain the high energy density.

According to some example embodiments, the dry electrode film 110 may include the electrode powder including the active material, the conductive material, and the binder. The dry electrode film 110 may have a sheet shape, which is manufactured by calendaring the electrode powder and has a given thickness, and have the yield strength of about 2.3 MPa or more in a sheet shape state. Porosity of the dry electrode film 110 may be in a range of about 50 % to about 70 %. The angle of internal friction of the electrode powder may be in a range of about 30° to about 50°. For example, the tensile strength of the dry electrode film may be in a range of about 0.5 MPa or more.

According to some example embodiments, the electrode active material may include at least one of nickel cobalt aluminum (NCA), lithium ferrophosphate (LFP), and graphite. However, the present disclosure is not limited thereto.

The substrate 120 may include a material which may not cause chemical changes, and that has high conductivity. For example, the substrate 120 may include at least one of copper, aluminum, stainless steel, nickel, a polymer coated with a conductive material, titanium, fired carbon, or a combination thereof.

In some example embodiments, the substrate 120 may be formed in a metal foil or a thin metal plate form such as at least one of copper, a copper alloy, nickel, or a nickel alloy. In other example embodiments, the substrate 120 may be formed in a metal foil or a thin metal plate form such as aluminum or an aluminum alloy.

Although the present disclosure has been described above with respect to example embodiments thereof, the present disclosure is not limited thereto. Various modifications and variations can be made thereto by those skilled in the art within the spirit of the present disclosure and the equivalent scope of the appended claims.

**DESCRIPTION OF SOME REFERENCE SYMBOLS:**

510: mold
520: electrode powder
530: pressurizing member
800: specimen
900: jig
910: measuring equipment

**Claims**

1. A method (S300) for manufacturing a dry electrode film, the method comprising:

preparing (S310) a dry mixture by dry mixing an active material, a conductive material, and a binder;
manufacturing (S320) a mixture lump by kneading the prepared dry mixture;
obtaining (S330) an electrode powder (520) by crushing the manufactured mixture lump;
manufacturing (S340) a specimen (800) using the obtained electrode powder (520) through a mold (510);
testing (S350) a yield strength of the manufactured specimen (800); and
manufacturing (S360), when a test result of the yield strength satisfies a desired criterion, a sheet type dry electrode film having a given thickness by calendaring the obtained electrode powder (520).

2. The method (S300) as claimed in claim 1, wherein the step of manufacturing the specimen (800) using the obtained electrode powder through the mold (510) comprises:

   filling the electrode powder (520) in the mold (510); and
   pressurizing the electrode powder (520) filled in the mold (510).

3. The method (S300) as claimed in claim 2, wherein the step of filling the electrode powder (520) in the mold (510) comprises filling the electrode powder (520) in the mold (510) so that a weight of the electrode powder (520) filled in the mold (510) is in a range of 1 g to 5 g.

4. The method (S300) as claimed in claim 2 or 3, wherein the step of pressurizing the electrode powder (520) filled in the mold (510) comprises pressurizing the electrode powder (520) at a pressure in a range of 10 MPa to 100 MPa using a pressurizing member (530).

5. The method (S300) as claimed in any of the previous claims, wherein the step of testing the yield strength of the manufactured specimen (800) comprises:

   pressurizing the manufactured specimen (800) to be destroyed using a jig (900);
   measuring a load applied to the specimen (800) when the specimen is destroyed; and
   calculating the yield strength of the specimen (800) based on the measured load.

6. The method (S300) as claimed in claim 5, wherein the step of calculating the yield strength of the specimen (800) comprises calculating the yield strength of the specimen (800) based on Equation 1;

Equation 1:

$$\text{Yield strength (kPa)} = 0.001 \times \left\{ \frac{\text{measured load (kg)} \times \text{acceleration of gravity} \left(\frac{m}{s^2}\right)}{\text{cross-sectional area of specimen} (m^2)} \right\}.$$

7. The method (S300) as claimed in claim 5 or 6, further comprising, after the step of calculating the yield strength of the specimen (800):
   crushing the electrode powder (520) when the yield strength is less than a given value, and preferably less than 2.3 MPa.

8. The method (S300) as claimed in any of claims 5 to 7, further comprising, after the step of calculating of the yield strength of the specimen (800):

   measuring an angle of internal friction of the electrode powder (520), preferably by using a powder fluidity evaluation method; and
   calculating a tensile strength of the specimen (800).

9. The method (S300) as claimed in claim 8, wherein the step of calculating the tensile strength of the specimen (800) comprises calculating the tensile strength of the specimen (800) based on Equation 2;

Equation 2:

$$\text{Tensile strength (kPa)} = \left\{ \frac{1 - \sin(\text{angle of internal friction } (°))}{1 + \sin(\text{angle of internal friction } (°))} \right\} \times \text{yield strength (kPa)} \ .$$

10. The method (S300) as claimed in claim 8 or 9, further comprising, after the step of calculating the tensile strength of the specimen (800), crushing the electrode powder (520) when the tensile strength calculated by Equation 2 is less than a given value, and preferably less than 0.5 MPa.

11. A dry electrode film (110), preferably manufactured by a method according to any of claims 1 to 10, the dry electrode film (110) comprising:

an electrode powder (520) comprising an active material, a conductive material, and a binder,
wherein the electrode powder (520) has a sheet shape manufactured through calendaring and has a given thickness, and a yield strength of the electrode powder

(520) is in a range of 2.3 MPa or more in a sheet shape state.

12. The dry electrode film (110) as claimed in claim 11, wherein an angle of internal friction of the electrode powder (520) is in a range of 30° to 50°.

13. The dry electrode film (110) as claimed in claims 11 or 12, wherein a tensile strength of the dry electrode film (110) is in a range of 0.5 MPa or more; and/or wherein a porosity of the dry electrode film (110) is in a range of 50 % to 70 %.

14. The dry electrode film (110) as claimed in any of claims 11 to 13, wherein the active material comprises at least one of nickel cobalt aluminum (NCA), lithium ferrophosphate (LFP), and graphite; and/or wherein the binder comprises at least one of polytetrafluoroethylene (PTFE), polyvinylidene fluoride (PVDF), and polyacrylonitrile (PAN).

15. A dry electrode comprising:

a substrate (120); and
a dry electrode film (110) on at least one surface of the substrate (120),
and wherein the dry electrode film (110) is configured according to any of claims 11 to 14.

S300

| S310 |
| --- |
| PREPARE DRY MIXTURE BY DRY MIXING ACTIVE MATERIAL, CONDUCTIVE MATERIAL, AND BINDER |

| S320 |
| --- |
| MANUFACTURE MIXTURE LUMP BY KNEADING DRY MIXTURE |

| S330 |
| --- |
| OBTAIN ELECTRODE POWDER BY CRUSHING MIXTURE LUMP |

| S340 |
| --- |
| MANUFACTURE SPECIMEN USING ELECTRODE POWDER THROUGH MOLD |

| S350 |
| --- |
| TEST YIELD STRENGTH OF SPECIMEN |

| S360 |
| --- |
| MANUFACTURE SHEET TYPE DRY ELECTRODE FILM HAVING CERTAIN THICKNESS BY CALENDARING ELECTRODE POWDER WHEN TEST RESULT OF YIELD STRENGTH SATISFIES PREDETERMINED CRITERION |

FIG. 1

FIG. 2

FIG. 3

FIG. 4

530

520

510

FIG. 5

FIG. 6

FIG. 7

FIG. 8

$$\sigma_u(kPa) = c\,\frac{mg}{A}$$

FIG. 9

$$\sigma_t = \frac{1-\sin\varphi}{1+\sin\varphi}\,\sigma_u$$

FIG. 10

110

120

100

FIG. 11

| Europäisches Patentamt European Patent Office Office européen des brevets | **EUROPEAN SEARCH REPORT** | **Application Number** EP 25 21 3751 |
| --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | KR 2023 0149668 A (LG ENERGY SOLUTION LTD [KR]) 27 October 2023 (2023-10-27) * claim 7 * ----- | 1-15 | INV. H01M4/04 H01M4/139 |
| X | CA 3 227 840 A1 (LG ENERGY SOLUTION LTD [KR]) 9 February 2023 (2023-02-09) * claim 5 * * claim 2 * ----- | 1-15 | |
| X | US 2023/042207 A1 (KANG SEONG-WOOK [KR] ET AL) 9 February 2023 (2023-02-09) * claim 8 * * claim 7 * ----- | 1-15 | |

| | TECHNICAL FIELDS SEARCHED (IPC) |
| --- | --- |
| | H01M |

The present search report has been drawn up for all claims

| Place of search | Date of completion of the search | Examiner |
| --- | --- | --- |
| Munich | 2 March 2026 | Koessler, Jean-Luc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

**EP 4 742 310 A1**

## ANNEX TO THE EUROPEAN SEARCH REPORT
## ON EUROPEAN PATENT APPLICATION NO.

EP 25 21 3751

02-03-2026

| Patent document cited in search report | | Publication date | Patent family member(s) | | Publication date |
|---|---|---|---|---|---|
| KR 20230149668 | A | 27-10-2023 | NONE | | |
| CA 3227840 | A1 | 09-02-2023 | CA | 3227840 A1 | 09-02-2023 |
| | | | CN | 117597792 A | 23-02-2024 |
| | | | JP | 7698067 B2 | 24-06-2025 |
| | | | JP | 2024519967 A | 21-05-2024 |
| | | | JP | 2025123350 A | 22-08-2025 |
| | | | KR | 20230022129 A | 14-02-2023 |
| | | | KR | 20260015973 A | 03-02-2026 |
| | | | WO | 2023014127 A1 | 09-02-2023 |
| US 2023042207 | A1 | 09-02-2023 | EP | 4152445 A1 | 22-03-2023 |
| | | | EP | 4475233 A1 | 11-12-2024 |
| | | | ES | 3012117 T3 | 08-04-2025 |
| | | | HU | E069856 T2 | 28-04-2025 |
| | | | KR | 20240054956 A | 26-04-2024 |
| | | | PL | 4152445 T3 | 17-03-2025 |
| | | | US | 2023042207 A1 | 09-02-2023 |
| | | | US | 2024274823 A1 | 15-08-2024 |
| | | | US | 2025192183 A1 | 12-06-2025 |

EPO FORM P0459